# EUROPEAN PATENT APPLICATION

(11) **EP 4 235 138 A1**
(43) Date of publication of application: **30.08.2023**
(21) Application number: 22745807.2
(22) Date of filing: 24.01.2022
(51) Int. Cl.: G01M 7/08, G01M 17/007

(54) **AUTOMOBILE COLLISION SIMULATION TEST BOGIE AND AUTOMOBILE COLLISION SIMULATION TEST DEVICE**

(30) Priority: 27.01.2021 JP 2021011001
(71) Applicant: Mitsubishi Heavy Industries Machinery Systems, Ltd., Kobe-shi, Hyogo 652-8585 (JP)
(72) Inventor: SHIMIZU, Masayuki, Kobe-shi, Hyogo 652-8585 (JP); NISHIMURA, Shinichiro, Kobe-shi, Hyogo 652-8585 (JP)
(74) Representative: Hoffmann Eitle
(86) International application number: PCT/JP2022/002445
(87) International publication number: WO 2022/163586

(57) **Abstract**

This automobile collision simulation test bogie is equipped with a bogie chassis capable of moving along a rail, and a liquid tank provided to the bogie chassis, having a storage section for storing a test body placed on the bogie chassis, and capable of holding a liquid in said storage section in a state in which the test body is stored therein.

## Description

### Technical Field

The present disclosure relates to an automobile collision simulation test bogie and an automobile collision simulation test device.

### Background Art

For example, there is a device disclosed in PTL 1 to be described below as an automobile collision simulation test device. The automobile collision simulation test device disclosed in PTL 1 includes a bogie on which a test body can be mounted and which is movable on horizontal rails extending in a front-rear direction, and a launching device that can launch a piston toward the bogie.

### Citation List

### Patent Literature

[PTL 1] Japanese Unexamined Patent Application Publication No. 2012-002699

### Summary of Invention

### Technical Problem

In recent years, a collision simulation test may be performed using a battery or the like, which is used for an electric automobile or the like, as a test body. There is a possibility that such a battery may generate heat or ignite in a case where an impact is applied to the battery. In a case where the test body generates heat or ignites on the bogie, it is required to quickly cool the test body or extinguish the fire of the test body.

The present disclosure has been made in consideration of the above, and an object of the present disclosure is to provide an automobile collision simulation test bogie and an automobile collision simulation test device that can quickly cool a placed test body or quickly extinguish the fire of the test body. Solution to Problem

An automobile collision simulation test bogie according to the present disclosure includes: a bogie body that is movable on a rail; and a liquid tank that is provided on the bogie body, includes a housing portion housing a test body placed on the bogie body, and is capable of holding liquid in the housing portion in a state where the test body is housed.

An automobile collision simulation test device according to the present disclosure includes: a rail that extends in one direction; the automobile collision simulation test bogie that is movable on the rail; a launching device that launches the automobile collision simulation test bogie in the one direction; and a control device that controls a liquid supply unit such that the liquid is supplied to the liquid tank of the automobile collision simulation test bogie.

### Advantageous Effects of Invention

According to the present disclosure, it is possible to quickly cool a placed test body or to quickly extinguish the fire of the test body.

### Brief Description of Drawings

Fig. 1 is a schematic configuration diagram showing an example of an automobile collision simulation test device according to a first embodiment.
Fig. 2 is a diagram showing an example of a case where a sled is viewed from a left side.
Fig. 3 is a diagram showing an example of a case where the sled is viewed from an upper side.
Fig. 4 is a diagram showing an example of a case where the sled is viewed from a rear side.
Fig. 5 is a diagram showing an example of a bottom portion of a liquid tank.
Fig. 6 is a flowchart showing an example of a procedure of an operation of the automobile collision simulation test device.
Fig. 7 is a schematic configuration diagram showing an example of a sled according to a second embodiment.
Fig. 8 is a diagram showing a state where a liquid tank of the sled is disposed at a housing position.
Fig. 9 is a schematic configuration diagram showing an example of a sled according to a modification example.
Fig. 10 is a diagram showing a state where a liquid tank of the sled is disposed at a housing position. Description of Embodiments

An automobile collision simulation test bogie and an automobile collision simulation test device according to embodiments of the present disclosure will be described below with reference to the drawings. The present invention is not limited by the embodiments. Further, components of the following embodiments include components that can be easily substituted by those skilled in the art or components that are substantially the same as the components of the following embodiments. In the present embodiment, a side to which a sled 10 is launched by a launching device 20 is defined as a rear side in a front-rear direction and a side opposite to the rear side is defined as a front side. Further, a left side and a right side in a case where the front side is viewed from the rear side corresponds to a left-right direction, and a left-hand direction corresponds to the left side and a right-hand direction corresponds to the right side. Furthermore, a direction perpendicular to a horizontal plane is defined as an up-down direction, a side above the horizontal plane is defined as an upper side, and a side below the horizontal plane is defined as a lower side.

### [First Embodiment]

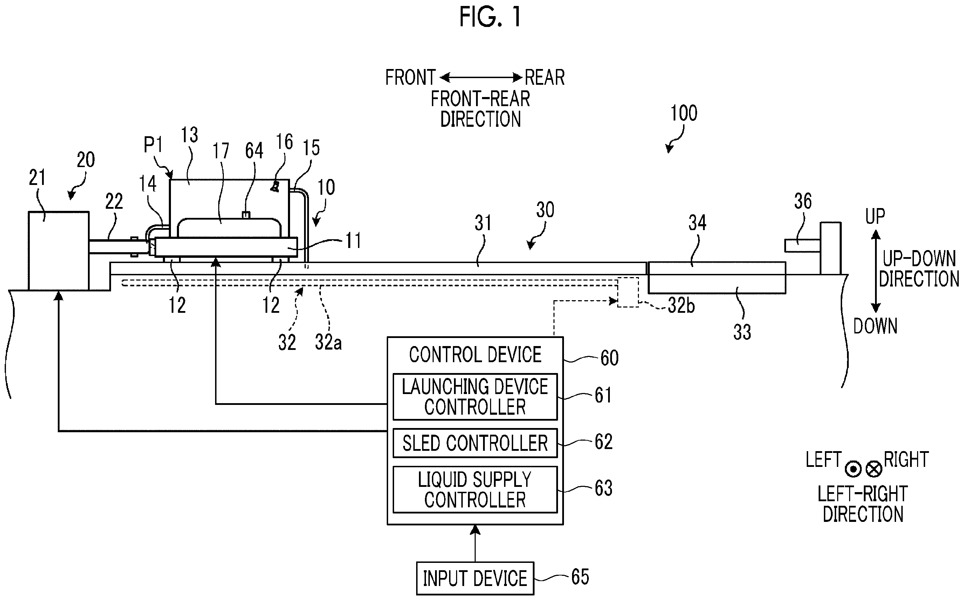

Fig. 1 is a schematic configuration diagram showing an example of an automobile collision simulation test device 100 according to a first embodiment. As shown in Fig. 1, the automobile collision simulation test device 100 includes a sled (automobile simulation test bogie) 10, a launching device 20, a rail unit 30, and a control device 60.

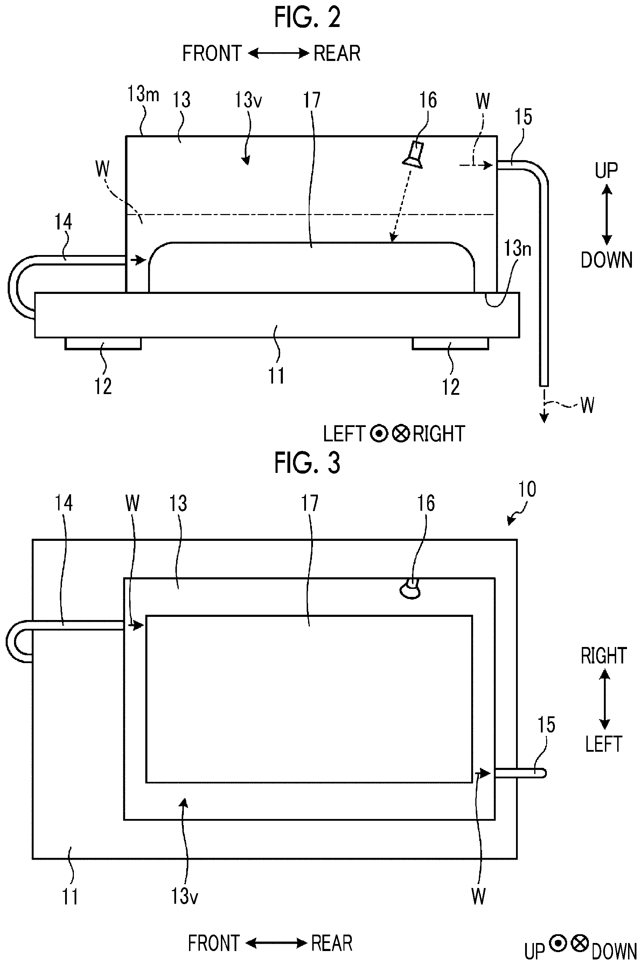

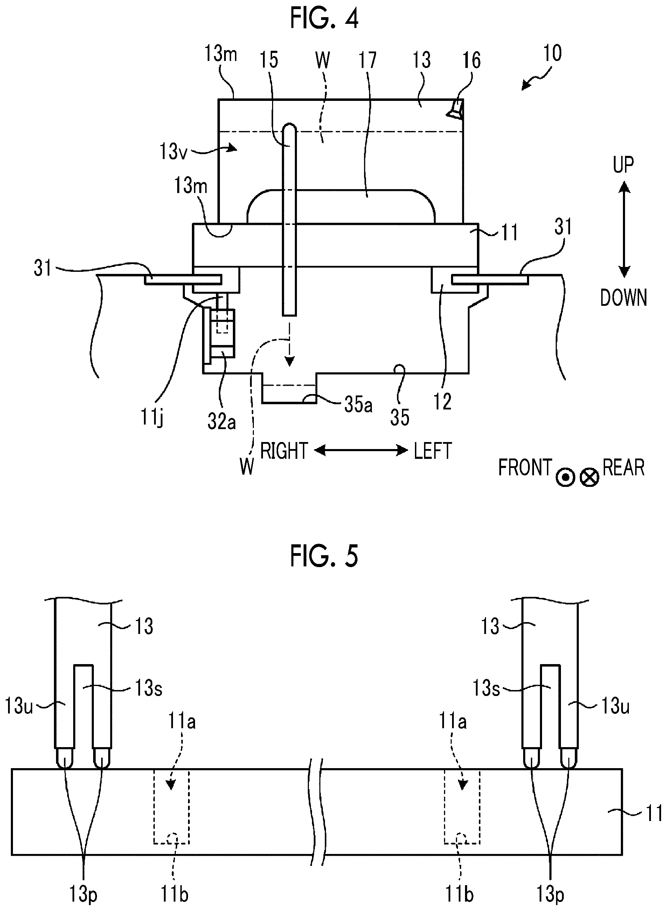

Fig. 2 is a diagram showing an example of a case where the sled 10 is viewed from a left side. Fig. 3 is a diagram showing an example of a case where the sled 10 is viewed from an upper side. Fig. 4 is a diagram showing an example of a case where the sled 10 is viewed from a rear side. As shown in Figs. 2 to 4, the sled 10 includes a sled body (bogie body) 11, sliders 12, a liquid tank 13, a liquid supply unit 14, a discharge part 15, and an imaging unit 16.

The sled body 11 is a frame member that includes a plate member having a predetermined thickness. A test body 17 can be mounted on an upper surface of the sled body 11. The test body 17 is, for example, a battery, such as a lithium battery, to be mounted on an automobile. The sled body 11 is an automobile including, for example, only a frame as the test body 17, a so-called white body, and equipment, such as seats, a steering wheel, airbags, and seat belts, may be mounted on the sled body 11 together with dummies.

The test body 17 is provided with, for example, a temperature detection unit 64 that detects the temperature of the test body 17. The temperature detection unit 64 may be configured to detect the temperature of the test body 17 in a contactless manner, for example, to image the test body 17 with an infrared camera or the like and to analyze imaging data to detect a temperature.

The sled body 11 includes a connecting portion 11j (see Fig. 4) on a lower surface thereof. The connecting portion 11j is connected to a chain 32a to be described later in a state where the connecting portion 11j protrudes downward from the sled body 11. Since the connecting portion 11j is connected to the chain 32a, the sled body 11 is movable integrally with the chain 32a.

The sliders 12 are disposed on a bottom surface of the sled body 11. The sliders 12 are moved while sliding on two rails 31 of the rail unit 30. For example, the slider 12 is disposed at a position corresponding to each of four corners on the bottom surface of the sled body 11, but the present disclosure is not limited thereto.

The liquid tank 13 is provided on the sled body 11. The liquid tank 13 has, for example, a rectangular tubular shape and has a configuration in which a top portion 13m and a bottom portion 13n are open. The liquid tank 13 is not limited to a rectangular tubular shape, and may have other shapes, such as a cylindrical shape and a polygonal tubular shape, as long as the liquid tank 13 has a shape that allows the liquid tank 13 to house the test body 17 and to hold liquid W. The liquid tank 13 is fixed to the sled body 11 by a fixing part (not shown).

The liquid tank 13 includes a housing portion 13v therein. The liquid tank 13 is disposed at a housing position P1 where the housing portion 13v houses the test body 17. The liquid tank 13 is disposed in a state where the bottom portion 13n is placed on the sled body 11. In the present embodiment, a space between the bottom portion 13n and the sled body 11 is closed due to the weight of the liquid tank 13. The liquid tank 13 can hold liquid W in the housing portion 13v in a state where the liquid tank 13 houses the test body 17.

The liquid supply unit 14 supplies the liquid W to the housing portion 13v of the liquid tank 13. The liquid supply unit 14 supplies the liquid W to the housing portion 13v from a source of supply through a pipe. For example, the source of supply of the liquid W may be provided in the sled body 11 or may be provided outside the sled body 11. The liquid W may be any liquid that can cool the test body 17 or extinguish the fire of the test body 17. Such a liquid W may be, for example, water or liquid in which an extinguishing agent is mixed with a solvent, such as water.

The discharge part 15 discharges a part, which exceeds a predetermined liquid level, of the liquid W held in the liquid tank 13. The discharge part 15 is, for example, a pipe and is connected to the liquid tank 13 at a predetermined height position. The discharge part 15 discharges the liquid W to, for example, a liquid discharge groove 35a formed on a bottom surface 35 of a recessed portion formed on the lower side of the rails 31.

The imaging unit 16 images the test body 17 to be tested. The imaging unit 16 transmits captured data to the control device 60. The imaging unit 16 is attached to, for example, the liquid tank 13. In this case, the imaging unit 16 is attached to the liquid tank 13 at a position higher than a height position where the discharge part 15 is provided. The imaging unit 16 may be disposed outside the liquid tank 13, and the liquid tank 13 may be provided with a window portion through which the imaging unit 16 images the test body 17.

The launching device 20 includes a device body 21 and a piston rod 22. The device body 21 includes a hydraulic mechanism that drives a piston rod 22 with, for example, hydraulic pressure. The piston rod 22 is moved in the front-rear direction by the drive of the device body 21, and applies acceleration to the sled body 11 to the rear side.

The rail unit 30 includes the two rails 31 described above. The rails 31 guide the sled body 11. The rails 31 are connected to an air pallet 33. The air pallet 33 includes connection rails 34 that are connected to the rails 31, respectively. The air pallet 33 can be transported to and from the outside in a state where the sled body 11 is placed on the connection rails 34. Further, a stopper 36 is disposed on the rear side of the air pallet 33. The stopper 36 restricts the rearward movement of the sled body 11.

The control device 60 generally controls the respective parts of the automobile collision simulation test device 100. The control device 60 includes a launching device controller 61, a sled controller 62, and a liquid supply controller 63. The launching device controller 61 controls the operation of the device body 21 of the launching device 20. The sled controller 62 controls each operation of the sled 10.

For example, in a case where a predetermined input operation is performed on the input device 65, in a case where a detection result of the temperature detection unit 64 (see Fig. 1) detecting the temperature of the test body 17 is equal to or higher than a threshold value, or the like, the liquid supply controller 63 controls the liquid supply unit 14 such that liquid W is supplied to the liquid tank 13. For example, an input device 65, which is used in a case where a worker operates the automobile collision simulation test device 100 or inputs information, is connected to the control device 60.

Fig. 5 is a diagram showing an example of the bottom portion 13n of the liquid tank 13. The bottom portion 13n of the liquid tank 13 is provided with seal portions 13p. The seal portions 13p are provided in an annular shape over the entire circumference of the bottom portion 13n in a circumferential direction. The seal portions 13p are disposed in a double annular shape at the bottom portion 13n. For example, a watertight packing and the like are used as the seal portion 13p.

The bottom portion 13n includes a recessed portion 13s between the inner seal portion 13p and the outer seal portion 13p. For example, in a case where liquid leaks from the inner seal portion 13p, the recessed portion 13s can house the leaking liquid. Since the seal portions 13p having a double annular shape and the recessed portion 13s are provided as described above, the leakage of the liquid held in the housing portion 13v is sufficiently suppressed.

Further, the sled body 11 includes mounting holes 11a used to mount the test body 17 as shown in Fig. 5. The mounting holes 11a are disposed at one or more positions in the sled body 11. The mounting holes 11a are provided not to penetrate the sled body 11. That is, each of the mounting holes 11a is configured to include a bottom portion 11b in an example shown in Fig. 5. With this configuration, the leakage of the liquid through the mounting holes 11a of the sled body 11 can be avoided in a case where liquid is held in the housing portion 13v.

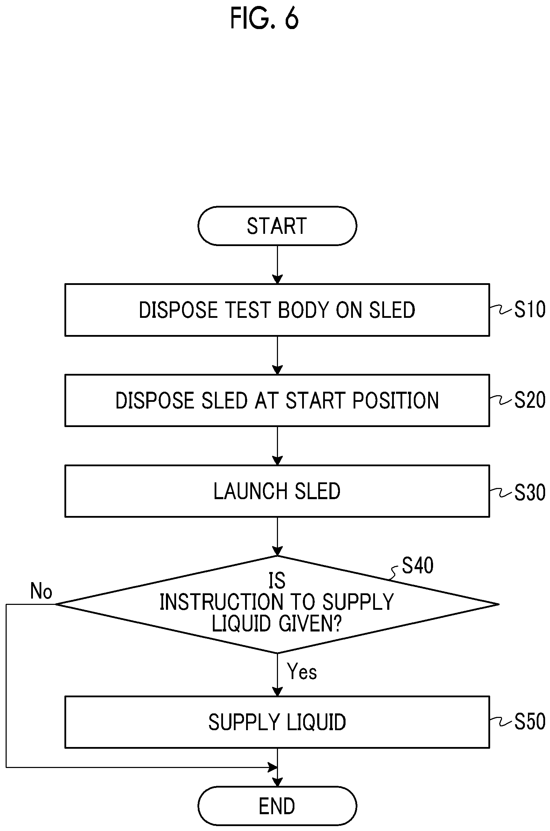

Next, the operation of the automobile collision simulation test device 100 having the above-mentioned configuration will be described. Fig. 6 is a flowchart showing an example of a procedure of the operation of the automobile collision simulation test device 100. As shown in Fig. 6, first, the test body 17 is placed on the sled body 11 of the sled 10 and the liquid tank 13 is disposed on the sled body 11 to house the test body 17 (Step S10). After that, the sled 10 is disposed at a start position (Step S20).

The launching device controller 61 controls the device body 21 of the launching device 20, and applies acceleration to the sled body 11, which is disposed at the start position, to the rear side to launch the sled body 11 (Step S30). The sled body 11 is moved rearward in a state where the rails 31 are clamped in a vertical direction by brake pistons of a brake device. The speed of the sled body 11 is gradually reduced by friction between brake pads and the rails 31 and the sled body 11 is stopped.

For example, the test body 17 mounted on the sled body 11 may generate heat or ignite due to an impact of launching. For example, in a case where a predetermined input operation is performed on the input device 65 by a worker having confirmed the generation of heat or ignition or in a case where a detection result of the temperature detection unit 64 (see Fig. 1) detecting the temperature of the test body 17 is equal to or higher than a threshold value (Yes in Step S40), the control device 60 performs an operation for supplying liquid W to the housing portion 13v of the liquid tank 13.

Specifically, the liquid supply controller 63 performs a control to supply liquid W to the housing portion 13v of the liquid tank 13 from the liquid supply unit 14 (Step S50). The liquid W supplied by this control is stored in the housing portion 13v, and the test body 17 is cooled or the fire of the test body 17 is extinguished with the liquid W. In a case where the level of the liquid W reaches the height position of the discharge part 15, the liquid W is sequentially discharged from the discharge part 15. For this reason, the overflow of the liquid W from the liquid tank 13 can be suppressed. In a case where the liquid W is supplied but the generation of heat, ignition, or the like is not confirmed and an input operation is not performed by a worker (No in Step S40), a test may be ended.

As described above, the sled 10 according to the present embodiment includes: the sled body 11 that is movable on the rails 31; and the liquid tank 13 that is provided on the sled body 11, includes the housing portion 13v housing the test body 17 placed on the sled body 11, and can hold liquid W in the housing portion 13v in a state where the test body 17 is housed.

Further, the automobile collision simulation test device 100 according to the present embodiment includes the rails 31 that extend in one direction, the sled 10 that is movable on the rails 31, the launching device that launches the sled 10 in one direction, and the control device 60 that controls the liquid supply unit 14 such that liquid W is supplied to the liquid tank 13 of the sled 10.

Accordingly, in a case where the test body 17 generates heat or ignites on the sled 10, liquid W is supplied to the housing portion 13v of the liquid tank 13 and is held in the housing portion 13v, so that the test body 17 can be quickly cooled or the fire of the test body 17 can be quickly extinguished with the liquid W.

The sled 10 according to the present embodiment further includes the liquid supply unit 14 that supplies liquid W to the housing portion 13v of the liquid tank 13. Accordingly, liquid W can be quickly supplied to the housing portion 13v of the liquid tank 13 from the liquid supply unit 14.

In the sled 10 according to the present embodiment, the liquid tank 13 is installed at the housing position P1 where the housing portion 13v houses the test body 17. Accordingly, since a test can be performed in a state where the housing portion 13v houses the test body 17, the test body 17 can be quickly cooled or the fire of the test body 17 can be quickly extinguished with the liquid W in a case where the test body 17 generates heat or ignites on the sled 10.

In the sled 10 according to the present embodiment, the liquid tank 13 includes the discharge part 15 that discharges a part, which exceeds a predetermined liquid level, of the liquid W held in the liquid tank 13. Accordingly, the overflow of the liquid W from the liquid tank 13 can be suppressed.

In the sled 10 according to the present embodiment, the liquid tank 13 includes the seal portions 13p that are provided on the bottom portion 13n to be placed on the sled body 11 and suppress the outflow of the liquid W. Accordingly, the leakage of the liquid W from the liquid tank 13 can be suppressed.

In the sled 10 according to the present embodiment, the sled body 11 includes the mounting holes 11a used to mount the test body 17 and the mounting holes 11a are provided not to penetrate the sled body 11. Accordingly, the leakage of the liquid W through the mounting holes 11a of the sled body 11 can be avoided.

### [Second Embodiment]

Next, a second embodiment will be described. A configuration in which the liquid tank 13 is disposed at the housing position P1 where the liquid tank 13 houses the test body 17 has been described in the above-mentioned first embodiment by way of example. On the other hand, in the second embodiment, a liquid tank 13A is configured to be movable between a housing position P1 where the liquid tank 13A houses a test body 17 of a sled body 11 and a standby position P2 where the liquid tank 13A does not house the test body 17. A specific description will be made below.

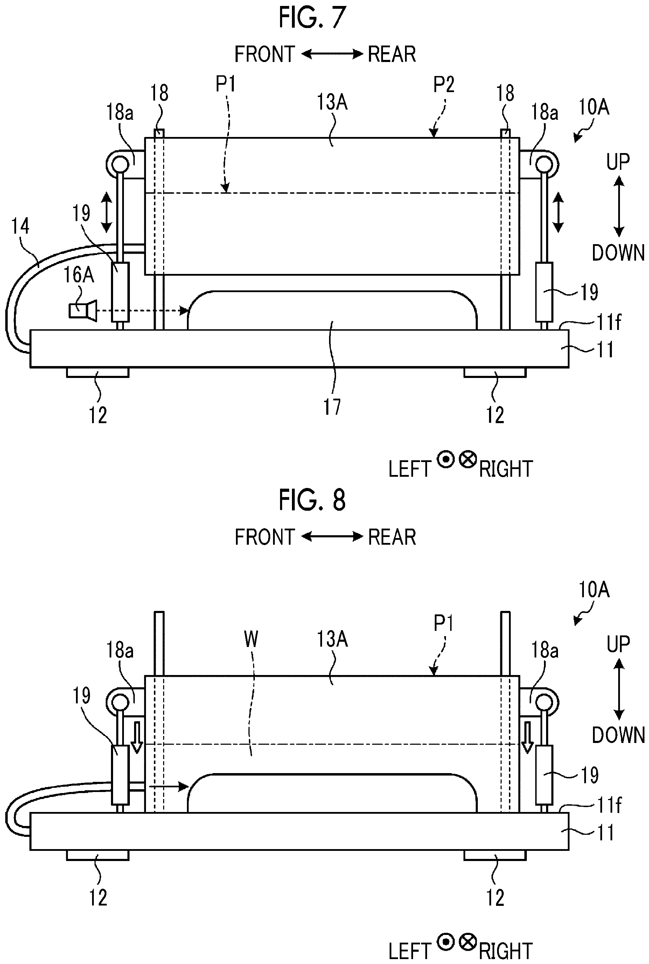

Fig. 7 is a diagram showing the configuration of a sled 10A according to the second embodiment. The discharge part 15 is not shown in Fig. 7. As shown in Fig. 7, the sled 10A is configured so that a liquid tank 13A is movable between a housing position P1 of the sled body 11 and a standby position P2 where the liquid tank 13A does not house the test body 17. In an example shown in Fig. 7, the liquid tank 13A is movable in a direction (up-down direction) perpendicular to a placement surface 11f of the sled body 11 on which the test body 17 is placed.

The sled body 11 is provided with guide members 18 that guide the movement of the liquid tank 13A. The guide members 18 are disposed to extend in the direction (up-down direction) perpendicular to the placement surface 11f. Further, the sled body 11 is provided with drive units 19 that move the liquid tank 13A. For example, an air cylinder and the like are used as the drive unit 19. The drive unit 19 can be elongated and contracted in the up-down direction by the control of the sled controller 62 or the like of the control device 60. The drive units 19 are connected between the sled body 11 and connection portions 18a of the liquid tank 13A. In a case where the drive units 19 are elongated and contracted in the up-down direction, the liquid tank 13A can be moved up and down in the up-down direction.

Further, the sled body 11 is provided with an imaging unit 16A. The imaging unit 16A is disposed on, for example, the side (the front side, the rear side, the left side, or the right side) of the test body 17. In a case where the liquid tank 13A is disposed at the standby position P2, the imaging unit 16A can image the test body 17 via a portion between the sled body 11 and the liquid tank 13A. Furthermore, in a case where a window portion or the like is formed in, for example, the liquid tank 13A, the imaging unit 16A can image the test body 17 through the window portion when the liquid tank 13A is disposed at the housing position P1.

Fig. 8 is a diagram showing a state where the liquid tank 13A of the sled 10A is disposed at the housing position P1. In the state shown in Fig. 7, in a case where a predetermined input operation is performed on the input device 65 by a worker having confirmed the generation of heat or ignition, or in a case where a detection result of the temperature detection unit 64 (see Fig. 1) detecting the temperature of the test body 17 is equal to or higher than a threshold value, the control device 60 performs a control such that liquid is supplied to the liquid tank 13A.

In this case, first, the sled controller 62 of the control device 60 controls the drive units 19 such that the liquid tank 13A is moved from the standby position P2 to the housing position P1. The liquid tank 13A is moved down and placed at the housing position P1 by the drive of the drive units 19. In this case, the sled controller 62 controls the drive units 19 such that a state where the bottom portion 13n of the liquid tank 13A is pushed against the sled body 11 is maintained. Sealing properties between the bottom portion 13n and the sled body 11 are improved by this control. After the liquid tank 13A is moved, the liquid supply controller 63 performs a control to supply liquid W to the housing portion 13v of the liquid tank 13A from the liquid supply unit 14. The liquid W is held in the housing portion 13v by this control and the held liquid W cools the test body 17 or extinguishes the fire of the test body 17.

As described above, in the sled 10A according to the second embodiment, the liquid tank 13A is movable between the housing position P1 where the liquid tank 13A houses the test body 17 of the sled body 11 and the standby position P2 where the liquid tank 13A does not house the test body 17. Accordingly, a test can be performed in a state where the liquid tank 13A houses the test body 17.

Further, in the sled 10A according to the second embodiment, the liquid tank 13A is movable in a direction perpendicular to the placement surface 11f of the sled body 11 on which the test body 17 is placed. Accordingly, since the liquid tank 13A is moved in the direction perpendicular to the placement surface 11f, the disposition of the liquid tank 13A can be easily switched between the housing position P1 and the standby position P2.

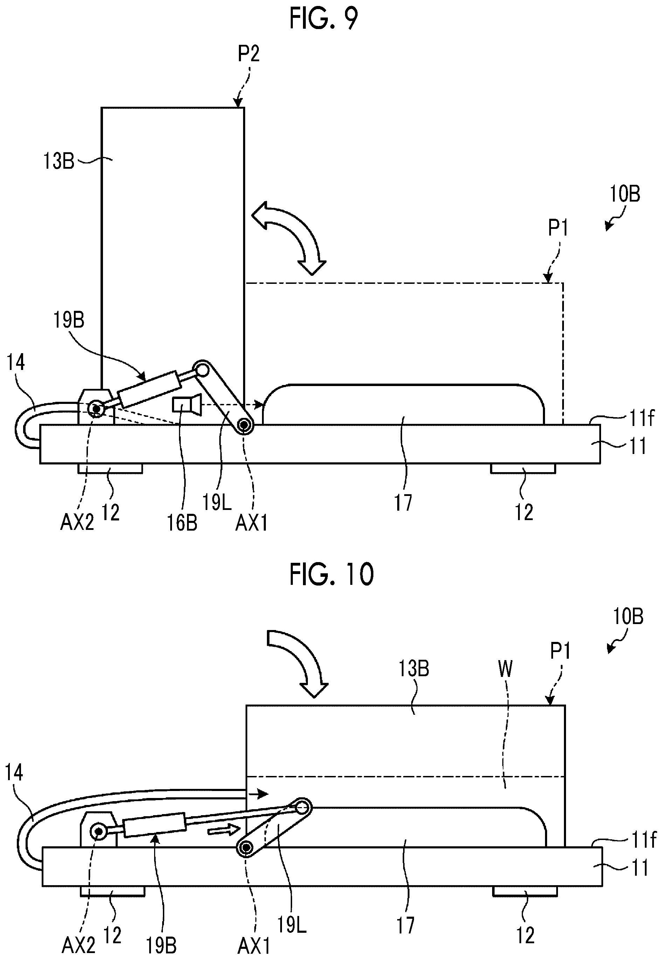

Fig. 9 is a diagram showing the configuration of a sled 10B according to a modification example. In the second embodiment, a configuration in which the liquid tank 13A is moved in a direction perpendicular to the placement surface 11f is shown in the example shown in Figs. 7 and 8. However, the present disclosure is not limited thereto. As shown in Fig. 9, in the sled 10B, a liquid tank 13B may be configured to be movable to rotate about a predetermined central axis AX1 positioned on a placement surface 11f of the sled body 11 on which the test body 17 is placed.

Since the liquid tank 13B is rotated about the central axis AX1 that is a linear portion at which one side of a bottom portion 13n and the placement surface 11f are in contact with each other, the liquid tank 13B is movable between a housing position P1 and a standby position P2.

The sled body 11 is provided with a drive unit 19B that moves the liquid tank 13B. For example, an air cylinder and the like are used as the drive unit 19B. The drive unit 19B can be elongated and contracted by the control of the sled controller 62 or the like of the control device 60, and can be rotated about a rotating shaft AX2. The drive unit 19B is connected between the sled body 11 and a wall portion of the liquid tank 13B via a link mechanism 19L. Since the drive unit 19B is elongated and contracted and is rotated about the rotating shaft AX2, the liquid tank 13B is rotatable about the central axis AX1 via the link mechanism 19L.

Further, the sled body 11 is provided with an imaging unit 16B. Like the imaging unit 16A, the imaging unit 16B is disposed on, for example, the side (the front side, the rear side, the left side, or the right side) of the test body 17. In a case where the liquid tank 13B is disposed at the standby position P2, the imaging unit 16B can image the test body 17 via a portion between the sled body 11 and the liquid tank 13B. Furthermore, in a case where a window portion or the like is formed in, for example, the liquid tank 13B, the imaging unit 16B can image the test body 17 through the window portion when the liquid tank 13B is disposed at the housing position P1.

Fig. 10 is a diagram showing a state where the liquid tank 13B of the sled 10B is disposed at the housing position P1. In the state shown in Fig. 9, in a case where a predetermined input operation is performed on the input device 65 by a worker having confirmed the generation of heat or ignition, or in a case where a detection result of the temperature detection unit 64 (see Fig. 1) detecting the temperature of the test body 17 is equal to or higher than a threshold value, the control device 60 performs a control such that liquid is supplied to the liquid tank 13B.

In this case, first, the sled controller 62 of the control device 60 controls the drive unit 19B such that the liquid tank 13B is moved from the standby position P2 to the housing position P1. The liquid tank 13B is rotated and placed at the housing position P1 by the drive of the drive unit 19B. In this case, the sled controller 62 controls the drive unit 19B such that a state where the bottom portion 13n of the liquid tank 13B is pushed against the sled body 11 is maintained. Sealing properties between the bottom portion 13n and the sled body 11 are improved by this control. After the liquid tank 13B is moved, the liquid supply controller 63 performs a control to supply liquid W to the housing portion 13v of the liquid tank 13B from the liquid supply unit 14. The liquid W is held in the housing portion 13v by this control and the held liquid W cools the test body 17 or extinguishes the fire of the test body 17.

As described above, in the sled 10B, the liquid tank 13B is movable to rotate about the predetermined central axis AX1 positioned on the placement surface 11f of the sled body 11 on which the test body 17 is placed. Accordingly, since the liquid tank 13B is rotated about the central axis AX1, the disposition of the liquid tank 13B can be easily switched between the housing position P1 and the standby position P2.

The technical scope of the present invention is not limited to the above-mentioned embodiments, and can be appropriately changed without departing from the scope of the present invention. For example, a configuration in which the sled 10 is provided with the liquid supply unit 14 for supplying liquid W to the liquid tank 13 has been described in the above-mentioned embodiments by way of example, but the present invention is not limited thereto. For example, a liquid supply unit may be disposed outside the sled 10 and may be configured to supply liquid to the liquid tank 13 due to the discharge of water or the like.

### Reference Signs List

10, 10A, 10B: sled
11: sled body
11a: mounting hole
11b, 13n: bottom portion
11f: placement surface
11j: connecting portion
12: slider
13, 13A, 13B: liquid tank
13m: top portion
13p: seal portion
13s: recessed portion
13v: housing portion
14: liquid supply unit
15: discharge part
16, 16A, 16B: imaging unit
17: test body
18: guide member
18a: connection portion
19, 19B: drive unit
19L: link mechanism
20: launching device
21: device body
30: rail unit
31: rail
32a: chain
35: bottom surface
35a: liquid discharge groove
60: control device
61: launching device controller
62: sled controller
63: liquid supply controller
64: temperature detection unit
65: input device
100: automobile collision simulation test device
AX1: central axis
AX2: rotating shaft
P1: housing position
P2: standby position
W: liquid

## Claims

1. An automobile collision simulation test bogie comprising:
a bogie body that is movable on a rail; and
a liquid tank that is provided on the bogie body, includes a housing portion housing a test body placed on the bogie body, and is capable of holding liquid in the housing portion in a state where the test body is housed.

2. The automobile collision simulation test bogie according to Claim 1, further comprising:
a liquid supply unit that supplies the liquid to the housing portion of the liquid tank.

3. The automobile collision simulation test bogie according to Claim 1 or 2,
wherein the liquid tank is installed at a housing position where the housing portion houses the test body.

4. The automobile collision simulation test bogie according to any one of Claims 1 to 3,
wherein the liquid tank includes a discharge part that discharges a part, which exceeds a predetermined liquid level, of the liquid held in the liquid tank.

5. The automobile collision simulation test bogie according to any one of Claims 1 to 4,
wherein the liquid tank includes a seal portion that is provided on a bottom portion to be placed on the bogie body and suppresses an outflow of the liquid.

6. The automobile collision simulation test bogie according to any one of Claims 1 to 5,
wherein the bogie body includes a mounting hole used to mount the test body, and
the mounting hole is provided not to penetrate the bogie body.

7. The automobile collision simulation test bogie according to any one of Claims 1 to 6,
wherein the liquid tank is movable between a housing position where the liquid tank houses the test body of the bogie body and a standby position where the liquid tank does not house the test body, and
the bogie body further includes a drive unit that moves the liquid tank.

8. The automobile collision simulation test bogie according to Claim 7,
wherein the liquid tank is movable in a direction perpendicular to a placement surface of the bogie body on which the test body is placed.

9. The automobile collision simulation test bogie according to Claim 8,
wherein the liquid tank is movable to rotate about a predetermined central axis positioned on the placement surface of the bogie body on which the test body is placed.

10. An automobile collision simulation test device comprising:
a rail that extends in one direction;
an automobile collision simulation test bogie according to any one of Claims 1 to 9 that is movable on the rail;
a launching device that launches the automobile collision simulation test bogie in the one direction; and
a control device that controls a liquid supply unit such that the liquid is supplied to the liquid tank of the automobile collision simulation test bogie.

11. The automobile collision simulation test device according to Claim 10, further comprising:
a temperature detection unit that detects a temperature of the test body placed on the bogie body of the automobile collision simulation test bogie,
wherein the control device performs a control such that the liquid is supplied in a case where the temperature of the test body detected by the temperature detection unit is equal to or higher than a threshold value.
